# EUROPÄISCHE PATENTSCHRIFT

(11) **EP 3 788 683 B1**
(45) Veröffentlichungstag und Bekanntmachung des Hinweises auf die Patenterteilung: **16.03.2022**
(21) Anmeldenummer: 19746032.2
(22) Anmeldetag: 17.07.2019
(51) Int. Cl.: H01R 39/38, H01R 39/40, H01R 39/08, H02K 9/28

(54) **HALTEVORRICHTUNG FÜR EINE SCHLEIFRINGEINHEIT, SCHLEIFRINGBRÜCKE, SCHLEIFRINGEINHEIT, ELEKTRISCHE MASCHINE SOWIE WINDKRAFTANLAGE**
HOLDING DEVICE FOR A SLIP RING UNIT, SLIP RING BRIDGE, SLIP RING UNIT, ELECTRIC MACHINE AND WIND POWER PLANT
DISPOSITIF DE MAINTIEN POUR UN UNITÉ DE BAGUE COLLECTRICE, PONT DE BAGUE COLLECTRICE, UNITÉ DE DE BAGUE COLLECTRICE, MACHINE ÉLECTRIQUE AINSI QU'ÉOLIENNE

(30) Priorität: 27.07.2018 EP 18186113
(43) Veröffentlichungstag der Anmeldung: 10.03.2021
(73) Patentinhaber: Flender GmbH, 46395 Bocholt (DE)
(72) Erfinder: BINDER, Herbert, 94127 Neuburg (DE); GRUBER, Robert, 94099 Ruhstorf (DE); MEMMINGER, Oliver, 94127 Neuburg a. Inn (DE)
(74) Vertreter: Michalski Hüttermann & Partner Patentanwälte mbB
(86) Internationale Anmeldenummer: PCT/EP2019/069245
(87) Internationale Veröffentlichungsnummer: WO 2020/020722

(56) Entgegenhaltungen:
- EP-A1- 2 961 009
- WO-A1-2016/192883
- JP-U- S5 643 282

## Beschreibung

Die Erfindung betrifft eine Haltevorrichtung für eine Schleifringeinheit sowie eine Schleifringbrücke und eine Schleifringeinheit. Darüber hinaus betrifft die Erfindung eine elektrische Maschine oder eine Windkraftanlage.

Schleifringeinheiten weisen Haltevorrichtungen für Schleifringbürsten auf. Mit Hilfe der Schleifringbürsten, auch als Bürsten bezeichnet, wird elektrische Leistung von einer sogenannten Bürstenbrücke auf einen Schleifring übertragen. Eine Bürstenbrücke weist in der Regel mehrere Haltevorrichtungen für jeweils eine Schleifringbürste auf. Die Schleifringbürste wird mit Hilfe der Bürstenbrücke bzw. der jeweiligen Haltevorrichtung derart positioniert, dass bei einer Drehbewegung eines Schleifrings elektrische Energie von der Bürstenbrücke (stationär) auf den Schleifring (drehbar) übertragen werden kann.

Bei der Übertragung von hohen elektrischen Leistungen ist die Kühlung der Schleifringeinheit von großer Bedeutung.

Die WO 2016 / 192 883 A1 offenbart eine Anordnung zur Führung und/oder Halterung von elektrisch leitfähigen Schleifkontaktelementen. Zur Belüftung von Bürsten offenbart die EP 2 961 009 A1 Vorsprünge an einem Rotationskörper zur Erzeugung eines Kühlluftstroms.

Die JP S56 43 282 U offenbart eine Anordnung aus zwei Bürstenhalter mit jeweils einer Vielzahl an Bürsten und einem zwischen den Bürstenhaltern angeordneten Lüftungskanal.

Es ist demnach Aufgabe der Erfindung, die Kühlung der Schleifringeinheit zu verbessern.

Die Aufgabe wird durch eine Haltevorrichtung für eine Schleifringeinheit nach Anspruch 1 gelöst. Weiter wird die Aufgabe durch eine Bürstenbrücke nach Anspruch 6 gelöst.

Darüber hinaus wird die Aufgabe durch eine Schleifringeinheit nach Anspruch 10 einer elektrischen Maschine nach Anspruch 12 und einer Windkraftanlage nach Anspruch 13 gelöst.

Vorteilhafte Ausgestaltungen der Erfindung und Weiterentwicklungen sind Gegenstand der abhängigen Ansprüche.

Der Erfindung liegt als eine Idee zu Grunde, dass ein Luftstrom, der insbesondere von einem Schleifring in axialer Richtung bereitgestellt wird, zur Kühlung der Schleifringbürsten dienen kann. Die vorteilhafte Haltevorrichtung weist zwei Einschübe für Schleifringbüsten auf, die durch einen Kühlkanal beabstandet angeordnet sind. Der jeweilige Einschub dient zur Aufnahme einer Schleifringbürste. Der Kühlkanal verläuft vorzugsweise zwischen den Einschüben. Der Kühlkanal dient zur Beabstandung der Einschübe. Der Luftstrom verläuft vorzugsweise durch den Kühlkanal und ist damit zur Kühlung der zueinander benachbarten Seitenflächen der Schleifringbürsten vorgesehen. Zur weiteren Verbesserung der Kühlung der Schleifringbürsten dienen Öffnungen, wobei die Öffnungen zur verbesserten Luftzufuhr zu den Schleifringbürsten in die Haltevorrichtung für die Schleifringbürsten eingebracht sind. Die Öffnungen können zumindest zum Teil auch in Form von Aussparungen ausgebildet sein.

Die Haltevorrichtung für eine Schleifringeinheit umfasst zumindest zwei Einschübe für jeweils eine Schleifringbürste, wobei die Einschübe beabstandet angeordnet sind, wobei die Einschübe durch jeweils einen Kühlkanal getrennt sind, dadurch gekennzeichnet, dass der jeweilige Kühlkanal jeweils zwischen den Einschüben positioniert ist und der jeweilige Kühlkanal zur Kühlung einer Seitenfläche der jeweiligen Schleifringbürste ausgebildet ist.

Unter einer Haltevorrichtung wird vorzugsweise eine Vorrichtung zur Aufnahme von zumindest zwei Schleifringbürsten verstanden. Die jeweilige Schleifringbürste dient vorteilhaft zur Übertragung von elektrischer Leistung auf ein Kontaktelement eines Schleifrings.

Die Haltevorrichtung dient vorzugsweise zur Positionierung und zur Ausrichtung der jeweiligen Schleifringbürste.

Die Haltevorrichtung ist vorzugsweise aus einem Kunststoff, einem Verbundwerkstoff oder einem Keramik-Werkstoff ausgebildet. Besonders vorteilhaft ist die Haltevorrichtung aus einem Metall, wie Messung oder Kupfer, ausgebildet.

Der Kühlkanal kann an seiner Außenseite bereichsweise aus einer Kühlschicht eines gut wärmeleitenden Materials, beispielhaft einem Metall, ausgebildet sein. Die Kühlschicht ist vorzugsweise zwischen dem jeweiligen Einschub des Kühlkanals und dem Kühlkanal positioniert.

Der Kühlkanal dient zur Aufnahme eines Luftstroms. Der Luftstrom durchläuft den Kühlkanal. Vorzugsweise ist der Kühlkanal in radialer Richtung zu einer Achse des Schleifrings ausgerichtet. Demnach dient der Kühlkanal zur Aufnahme eines Luftstroms, der in radialer Richtung verläuft.

Die einsetzbaren Schleifringbürsten weisen vorzugsweise einen rechteckigen Querschnitt auf, wobei die (Seiten-) Flächen der Schleifringbürsten mit der größeren Fläche zueinander benachbart sind. Die Einschübe sind vorzugsweise so dimensioniert, dass die jeweilige Schleifringbürste zumindest an zwei Seiten der Innenfläche grenzt. Vorzugsweise sind die Seitenflächen der Schleifringbüsten und somit die Seiten des jeweiligen Einschubes parallel zueinander ausgebildet.

Vorzugsweise weist die Haltevorrichtung drei Einschübe auf, wobei die äußeren beiden Einschübe zum Einschub der jeweiligen Schleifringbürste ausgebildet sind.

Der Kühlkanal ist erfindungsgemäß als dritter Einschub zwischen Einschüben für die jeweilige Schleifringbürste positioniert.

Für eine besonders einfache Herstellung der Haltevorrichtung ist vorgesehen, dass die Einschübe sowie der Kühlkanal eine im Wesentlichen gleiche Form und Abmessung aufweisen.

Durch die Erfindung kann die Kühlung der Schleifringbüsten wesentlich verbessert werden.

Bei einer vorteilhaften Ausgestaltung der Erfindung weist der jeweilige Einschub an zumindest einer Seitenfläche eine Öffnung auf, wobei die Öffnungen einen Zugang zu der jeweiligen Schleifringbürste ausbilden.

Die Öffnung bildet einen Zugang von dem Kühlkanal zu der jeweiligen Schleifringbürste. Die Öffnung dient vorzugsweise zur direkten Verbindung des Luftstroms mit der jeweiligen Schleifringbürste. Die Öffnung dient weiter vorzugsweise für eine verbesserte Kühlung der jeweiligen Schleifringbürste.

Weitere Öffnungen können optional an weiteren Seiten der Einschübe ausgebildet sein.

Die Öffnungen sind nicht notwendig mit einem geschlossenen Rand aus Material versehen. Die jeweilige Öffnung kann auch durch eine Aussparung im Material ausgebildet sein.

Die jeweilige Öffnung dient vorzugsweise auch zur Reduktion des Gewichtes der jeweiligen Haltevorrichtung.

Darüber hinaus verbessert die jeweilige Öffnung der Haltevorrichtung die Kühlung der jeweiligen Schleifringbürste.

In einer weiteren vorteilhaften Ausgestaltung der Erfindung verbindet die Öffnung den Kühlkanal mit dem jeweiligen Einschub.

Durch die Öffnung, die zwischen dem Kühlkanal und dem jeweiligen Einschub positioniert ist, ist ein direkter Kontakt der jeweiligen Schleifringbürste mit dem Luftstrom möglich. Vorzugsweise verläuft der Luftstrom durch den Kühlkanal, so dass mit Hilfe der Öffnungen die jeweils zugewandten Seiten der Schleifringbürste gekühlt werden können.

Insbesondere die Öffnung zwischen dem jeweiligen Einschub und dem Kühlkanal kann auch als Aussparung ausgebildet sein. Bei der Aussparung kann eine Schicht, die zur Trennung des jeweiligen Einschubes von dem Kühlkanal dient, nur im Randbereich ausgebildet sein. Vorzugsweise ist zwischen dem Kühlkanal und dem jeweiligen Einschub lediglich bereichsweise eine Schicht von einem halben Millimeter bis 2 Millimetern Breite angeordnet.

Durch die Öffnung oder der Aussparung zwischen dem jeweiligen Einschub und dem Kühlkanal ist eine besonders gute Kühlung der jeweiligen Schleifringbürste möglich.

Bei einer weiteren vorteilhaften Ausgestaltung der Erfindung ist zumindest eine Feder zur Positionierung und/oder Ausrichtung der jeweiligen Schleifringbürste vorgesehen.

Die Feder ist vorzugsweise als Blattfeder ausgebildet. Die Feder dient vorzugsweise zur Positionierung der Schleifringbürste derart, dass eine Seite der Schleifringbürste während der Drehbewegung eines Schleifrings die jeweilige Kontaktfläche der Schleifringbürste berührt.

Die Positionierung oder Ausrichtung der jeweiligen Schleifringbürste erfolgt vorzugsweise durch den Kontakt der Schleifringbürste mit den Innenflächen des jeweiligen Einschubes. Durch den Kontakt kann auch die Kühlung verbessert werden, insbesondere falls die Haltevorrichtung ein gut wärmeleitendes Material, wie einem Metall, umfasst.

Die Feder kann darüber hinaus zur verbesserten Kontaktierung einer Stromleitung mit der Schleifringbürste beitragen. Vorzugsweise wird mit Hilfe der Feder die jeweilige Schleifringbürste derart positioniert und/oder ausgerichtet, so dass eine großflächige Verbindung der jeweiligen Schleifringbürste mit einem Anschlusselement zur Übertragung der elektrischen Leistung auf die Schleifringbürste gewährleistet ist.

Bei Unterbrechungen einer Übertragung von elektrischer Leistung entsteht in der Regel Wärme, so dass die Feder funktionell zur Vermeidung dieser Wärme beiträgt.

Somit trägt die Feder vorzugsweise sowohl zur verbesserten Kühlung als auch zur möglichst kontinuierlichen Übertragung von elektrischer Leistung bei.

Bei einer weiteren vorteilhaften Ausgestaltung der Erfindung ist der jeweilige Einschub an einer Seite des Kühlkanals angeordnet. Alternativ deckt der Kühlkanal nur einen Bruchteil der jeweiligen Seitenfläche des jeweiligen Einschubes ab.

Vorzugsweise ist der jeweilige Einsatz an einer jeweils einander zugewandten Seitenfläche des Kühlkanals angeordnet.

Vorzugsweise sind die Seitenflächen der jeweiligen Einschübe und damit die Seitenflächen der jeweiligen Schleifringbürste parallel ausgebildet.

Bei einer weiteren vorteilhaften Ausgestaltung der Erfindung ist die Haltevorrichtung aus einem Kunststoff, einem leicht zu bearbeitenden Metall oder einem Verbundwerkstoff ausgebildet.

Als Material für die Haltevorrichtung eignet sich beispielhaft Teflon (Polytetrafluorethylen) oder ein Kunstharz. Alternativ ist ein Verbundwerkstoff, wie Glasfaser, aufgrund der hohen mechanischen Stabilität gut geeignet. Besonders bevorzugt ist die Haltevorrichtung aus einem Metall, wie Aluminium, Bronze, Messing, Kupfer oder Edelstahl, ausgebildet.

Je nach Kontaktierung der Schleifringbürste kann auch ein Metall zur Aufnahme der Schleifringbüsten Verwendung finden. Die Verwendung eines Metalls ist insbesondere in dem Falle vorteilhaft, falls alle Schleifringbürsten in einer Haltevorrichtung dasselbe elektrische Potential aufweisen.

Durch die Verwendung eines leicht zu bearbeitenden Materials ist eine einfache Herstellung einer hier beschriebenen Haltevorrichtung möglich.

Die Schleifringbrücke weist zumindest ein bogenförmiges Grundelement auf, wobei zumindest eine hier beschriebene Haltevorrichtung an dem bogenförmigen Grundelement befestigt ist, so dass die Einschübe des jeweiligen Halteelements derart ausgerichtet sind, dass die jeweils in dem Einsatz einsetzbare Schleifringbürste orthogonal zu einer zylindrischen Mantelfläche, insbesondere einer Kontaktfläche eines Schleifrings, ausgerichtet sind.

Die Schleifringbrücke dient vorteilhaft zur Positionierung und/oder zur Ausrichtung der jeweiligen Schleifringbürste. Die Schleifringbürsten sind in den Haltevorrichtungen positioniert, wobei die jeweilige Haltevorrichtung an einem bogenförmigen Grundelement befestigt ist.

Vorteilhaft sind die bogenförmigen Grundelemente so geformt und angeordnet, dass sie bereichsweise zur Umfassung eines Schleifrings ausgebildet sind.

Das bogenförmige Grundelement verläuft vorteilhaft bereichsweise um eine Achse des Schleifrings, wobei die der Achse zugewandte Seite mit einem Abstand von 5 Millimeter bis 20 Millimeter entlang der Mantelfläche des Schleifrings verläuft. Ein Innenradius des bogenförmigen Grundelements ist demnach etwas größer als der Radius der Mantelfläche des Schleifrings ausgebildet.

Vorzugsweise ist das jeweilige bogenförmige Grundelement einer elektrischen Stromphase zugeordnet. Die an dem jeweiligen Grundelement befestigten Haltevorrichtungen sind vorzugsweise jeweils elektrisch verbunden. Durch die elektrische Verbindung der Schleifringbürsten in den Haltevorrichtungen, die an jeweils einem bogenförmigen Grundelement befestigt sind, ist eine besonders effiziente Übertragung der elektrischen Leistung möglich.

Vorzugsweise sind die bogenförmigen Grundelemente aus Metall, beispielsweise aus Aluminium oder aus Edelstahl, gefertigt.

Durch die Fertigung der bogenförmigen Grundelemente aus Metall sind diese besonders stabil ausgebildet. Zudem können die bogenförmigen Grundelemente durch ihre gute Wärmeleitung zur verbesserten Kühlung der Schleifringbürsten und/oder zur verbesserten Kühlung der jeweiligen Haltevorrichtung beitragen.

Zur verbesserten Kühlung kann das bogenförmige Grundelement Aufprägungen, insbesondere Kühlfahnen, aufweisen.

Das bogenförmige Schleifringelement ist vorzugsweise im Wesentlichen wie ein Ringabschnitt geformt. Durch die Form können die Halteelemente und somit die Schleifringbürsten jeweils in radialer Ausrichtung um einen Schleifring angeordnet werden.

Die Schleifringbrücke ist auf der Seite, welche radial nach innen zeigt, vorzugsweise rund oder mehreckig ausgebildet. Die radial nach innen zeigende Fläche umschließt beabstandet einen Schleifring.

In einer weiteren vorteilhaften Ausgestaltung der Erfindung weist die Schleifringbrücke mehrere radiale Grundelemente auf, wobei die bogenförmigen Grundelemente mit zumindest einem axialen Grundelement verbindbar sind und wobei die bogenförmigen Grundelemente so ausgerichtet sind, dass die jeweiligen Haltevorrichtungen (1), welche an dem bogenförmigen Grundelement (11b) befestigt sind, parallel zueinander ausgebildet sind.

Die Mantelfläche der Schleifringbrücke ist vorzugsweise im Wesentlichen der Mantelfläche des Schleifrings nachgebildet. Vorzugsweise ist die Mantelfläche mit einem etwas größeren Radius ausgebildet, so dass ein Abstand der Mantelfläche durch die Schleifringbürsten überbrückt wird.

Das jeweilige axiale Grundelement dient zur Beabstandung der bogenförmigen Grundelemente. Vorzugsweise sind zumindest drei axiale Grundelemente vorhanden, um eine parallele Ausrichtung der bogenförmigen Grundelemente zu gewährleisten.

Die axialen Grundelemente verlaufen vorzugsweise parallel zur Achse des Schleifrings.

Das jeweilige axiale Grundelement umfasst vorzugsweise einen metallischen Bolzen und eine Hülle aus Kunststoff. Der metallische Bolzen dient vorzugsweise zur stabilen Verbindung der bogenförmigen Grundelemente. Die Hülle, die vorzugsweise aus Kunststoff ausgebildet ist, dient vorzugsweise zur Isolation der bogenförmigen Grundelemente zueinander.

Optional weisen die axialen Grundelemente Vorsprünge auf. Die Vorsprünge dienen zur Kriechwegverlängerung und somit zur verbesserten Isolation der bogenförmigen Grundelemente.

Durch die beabstandet angeordneten bogenförmigen Grundelemente können die Phasen einer Mehrphasen-Wechselspannung einfach und sicher voneinander isoliert einem Schleifring bereitgestellt werden.

Durch den Aufbau der Schleifringbrücke kann ein besonders kompakter und stabiler Aufbau einer Schleifringeinheit bereitgestellt werden.

Bei einer weiteren vorteilhaften Ausgestaltung der Erfindung besteht das jeweilige bogenförmige Grundelement zumindest zum Teil aus einem Metall, insbesondere Kupfer, Aluminium oder Edelstahl, wobei das bogenförmige Grundelement zur elektrischen Verbindung der Schleifringbürsten ausgebildet ist, welche dem jeweiligen bogenförmigen Grundelement zugeordnet sind.

Das bogenförmige Grundelement ist vorzugsweise aus einem gut elektrisch leitenden Metall ausgebildet oder zumindest weitgehend aus einem elektrisch gut leitenden Metall ausgebildet.

Als gut leitendes Metall eignet sich insbesondere Kupfer, Aluminium, Messing oder Bronze.

Vorzugsweise sind die Haltevorrichtungen mit einer elektrisch leitfähigen Schraubverbindung mit dem jeweils zugeordneten bogenförmigen Grundelement verbunden. Vorteilhaft dient die Schraubverbindung zur elektrischen Verbindung des bogenförmigen Grundelementes über die jeweilige Feder zu der jeweiligen Schleifringbürste.

Vorteilhaft kann das bogenförmige Grundelement weitgehend mit einer Isolierschicht umfasst sein. Eine solche Isolierschicht dient vorteilhaft zur Verminderung von unvorhergesehenen Entladungen.

Bei einer weiteren vorteilhaften Ausgestaltung der Erfindung ist das jeweilige axiale Grundelement zur Isolation und/oder zur Beabstandung der jeweiligen bogenförmigen Grundelemente ausgebildet.

Bei einer weiteren vorteilhaften Ausgestaltung der Erfindung weist die Schleifringbrücke zumindest vier bogenförmige Grundelemente auf, die jeweils von axialen Grundelementen in paralleler Ausrichtung beabstandet positioniert sind.

Vorzugsweise dient die Schleifringbrücke zur Bereitstellung einer Dreiphasen-Wechselspannung. Vorzugsweise wird darüber hinaus ein konstantes Potential (Erdpotential, Nullpotential) für den Schleifring bereitgestellt. Die Bereitstellung der Drehphasen-Wechselspannung erfolgt vorteilhaft durch eine Mehrzahl von Schleifringbürsten, die jeweils beabstandet angeordnet sind und jeweils einem bogenförmigen Grundelement zugeordnet sind.

Das konstante Potential wird vorzugsweise ebenfalls durch Schleifringbürsten bereitgestellt. Die Schleifringbürsten, die zur Bereitstellung des konstanten Potentials vorgesehen sind, sind vorzugsweise einem vierten bogenförmigen Grundelement zugeordnet.

Durch den bevorzugten Aufbau kann eine Dreiphasenwechselspannung einfach an einen Schleifring bereitgestellt werden.

Die Schleifringeinheit weist einen Schleifring und eine hier beschriebene Schleifringbrücke auf, wobei der Schleifring eine oder mehrere Kontaktflächen umfasst, wobei die Kontaktflächen jeweils beabstandet um die Mantelfläche des Schleifrings umlaufend angeordnet sind, wobei der Schleifring Aussparungen in der jeweiligen Kontaktfläche aufweist, und die Aussparungen, insbesondere bei Drehung des Schleifrings, einen Luftstrom in radialer Richtung durch den Kühlkanal der jeweiligen Haltevorrichtung bereitstellen, wobei der Luftstrom zur Kühlung zumindest einer Seitenfläche der jeweiligen Schleifringbürste ausgebildet ist.

Der Schleifring weist an seiner Kontaktfläche Aussparungen auf, wobei die Aussparungen zur Bereitstellung eines radialen Luftstroms ausgebildet sind. Insbesondere Bohrungen, die in die Aussparung des Schleifrings münden, dienen zur Bereitstellung des Luftstroms. Darüber hinaus weist der Schleifring vorteilhaft Aufprägungen auf, wobei die Aufprägungen bei einer Drehbewegung des Schleifrings den Luftstrom induzieren.

Die Aussparungen in den Kontaktflächen sind so positioniert, dass der Luftstrom in den Schacht und somit zwischen den Schleifringbürsten strömt. Der Luftstrom dient zur Kühlung des Schleifrings und der jeweiligen Schleifringbürste.

Ein vorteilhafter Schleifring umfasst Isolierbereiche und jeweils zwischen den Isolierbereichen angeordnete Kontaktbereiche. Die Kontaktbereiche können jeweils zylinderförmig ausgebildet sein und weisen vorteilhaft an ihrer Mantelfläche Kontaktbereiche auf. Die Kontaktbereiche sind vorzugsweise von einer Ausprägung in tangentialer Richtung durchtrennt. Die Aussparung kann sich soweit in den Kontaktbereich erstrecken, so dass Bohrungen, welche sich in axialer Richtung durch den Kontaktbereich führen, vorteilhaft in die Aussparung des Schleifrings münden. Ein Luftstrom, der in axialer Richtung verläuft, kann durch die Öffnungen in die Aussparung des Schleifrings überführt und in einen Luftstrom in radialer Richtung umgeleitet werden. Einprägungen an der Unterseite der Aussparung dienen vorteilhaft zur Verstärkung des Luftstroms bei einer Drehbewegung des Schleifrings in radialer Richtung. Der Luftstrom, der von dem Schleifring ausgehen kann, dient vorteilhaft zur Kühlung von Schleifringbürsten und der Innenseite der Aussparung, wobei die Schleifringbürsten zur Übertragung von elektrischer Leistung auf den Schleifring vorgesehen sein können.

In einer weiteren vorteilhaften Ausgestaltung der Erfindung sind die Öffnungen zum Beaufschlagen der jeweiligen Schleifringbürste mit dem Luftstrom ausgebildet.

Die Öffnungen dienen zur direkten Zuleitung des Luftstroms, der von dem Schleifring ausgeht, zu den Schleifringbürsten. Durch den direkten Kontakt des Luftstroms zu den Schleifringbürsten erfolgt eine besonders gute Kühlung der Schleifringbürsten.

Die Erfindung dient vorzugsweise zum Einsatz bei fremderregten elektrischen Maschinen. Insbesondere beim Einsatz von elektrischen Maschinen als Generatoren werden fremderregte elektrische Maschinen verwendet. Insbesondere im Einsatz solcher Generatoren bei Windkraftanlagen müssen hohe elektrische Leistungen übertragen werden. Bei solch hohen Leistungen ist der Kühlung besondere Beachtung einzuräumen. Weiter kann die hier dargestellte Erfindung besonders kompakt ausgebildet werden.

In einer vorteilhaften Ausgestaltung der Erfindung dient diese zum Übertrag von elektrischen Leistungen von zumindest einem Megawatt, vorzugsweise von einer elektrischen Leistung von zumindest fünf Megawatt.

Optional oder zusätzlich erfolgt der Einsatz einer hier beschriebenen Erfindung bei einer Übertragung von einer elektrischen Leistung für einen elektrischen Pitch-Antrieb bei einer Windkraftanlage.

In Folgenden wird die Erfindung anhand von Figuren näher beschrieben und erläutert. Die Figuren zeigen lediglich beispielhafte Ausgestaltungen der Erfindung und schränken die Erfindung keinesfalls ein. Die in den Figuren gezeigten Merkmale können zu neuen Ausführungsformen gemäß der Erfindung zusammengesetzt werden. Es zeigen:
- FIG 1: ein Schema einer Haltevorrichtung,
- FIG 2: eine beispielhafte Haltevorrichtung,
- FIG 3: eine beispielhafte Schleifringbrücke, sowie
- FIG 4: eine beispielhafte Schleifringeinheit.

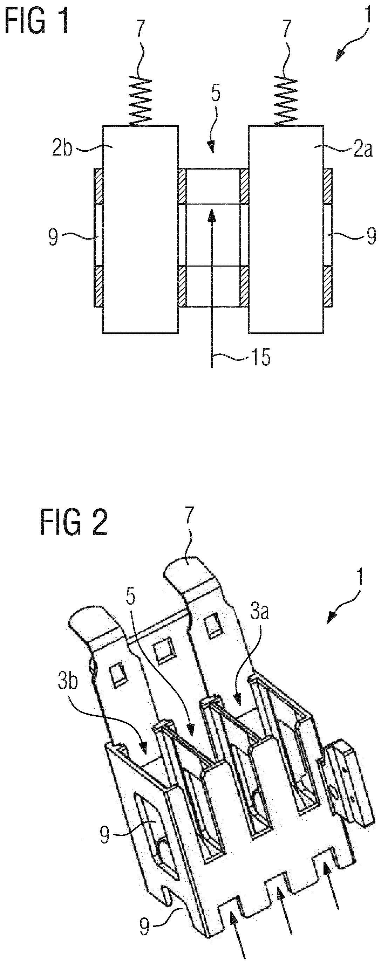

FIG 1 zeigt ein Schema einer Haltevorrichtung 1. Die Haltevorrichtung 1 weist zwei Einschübe 3a, 3b auf, wobei die Einschübe 3a, 3b zur Aufnahme jeweils einer Schleifringbürste 2a, 2b vorgesehen sind. Die jeweilige Schleifringbürste 2a, 2b ist jeweils von einer Feder 7 in ihrer Position fixiert. Mit Hilfe der Feder 7 wird vorzugsweise die Schleifringbürste so positioniert, dass es die Kontaktfläche eines Schleifringes (nicht gezeigt) während der Drehbewegung des Schleifrings die Schleifringbürste (2a, 2b) berührt.

Zwischen den Einschüben 3a, 3b ist ein Kühlkanal 5 positioniert. Der Kühlkanal 5 dient zur Durchführung eines Luftstroms 15. Der Luftstrom 15 dient zur Kühlung der jeweiligen Schleifringbürste 2a, 2b. Der Kühlkanal 5 ist zwischen den beiden Einschüben 3a, 3b positioniert, so dass der Luftstrom 15 jeweils eine Seitenfläche der jeweiligen Schleifringbürste 2a, 2b kühlt. Die Haltevorrichtung 1 weist zur verbesserten Kühlung des jeweiligen Schleifringelements 2a, 2b Öffnungen 9 auf. Die Öffnungen 9 dienen zum direkten Kontakt des Luftstroms 15 mit der jeweiligen Schleifringbürste 2a, 2b.

FIG 2 zeigt eine beispielhafte Haltevorrichtung 1. Die Haltevorrichtung umfasst jeweils einen Einschub 3a, 3b. Der jeweilige Einschub 3a, 3b ist durch einen Kühlkanal 5 getrennt. Der Kühlkanal 5 ist zwischen den beiden Einschüben 3a, 3b positioniert. Öffnungen 9 zwischen dem jeweiligen Einschub 3a, 3b und dem Kühlkanal 5 dienen zu einem möglichen direkten Kontakt der Schleifringbürste 2a, 2b mit dem Luftstrom 15 (nicht dargestellt). Weitere Öffnungen 9 dienen zur verbesserten Kühlung der jeweiligen Schleifringbürste 2a, 2b. Die in der Figur gezeigte Feder 7 dient zur Positionierung und zur Ausrichtung der jeweilig einsetzbaren Schleifringbürste 2a, 2b. Die unten abgebildeten Pfeile dienen zur Darstellung des Luftstroms 15. Der Luftstrom 15 durch den Kühlkanal 5 ist vorteilhaft stärker ausgebildet, als der Luftstrom 15, dessen Pfeildarstellung zu den Einschüben 3a, 3b zeigt.

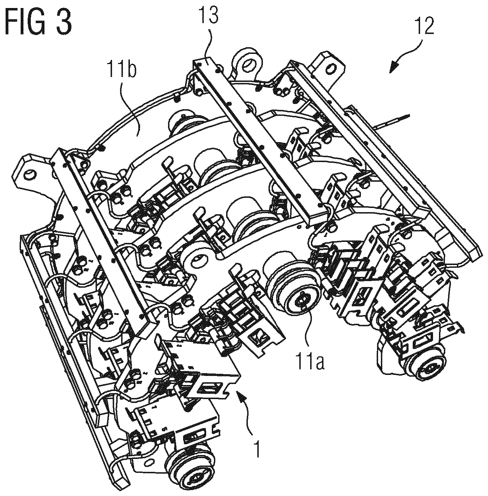

FIG 3 zeigt eine beispielhafte Schleifringbrücke 12. Die Schleifringbrücke 12 umfasst mehrere bogenförmige Grundelemente 11b, die mit einer Mehrzahl von axialen Grundelementen 11a jeweils beabstandet sind. Das jeweilige bogenförmige Grundelement 11b dient als Grundlage für die Befestigung der jeweiligen Haltevorrichtung 1. Das axiale Grundelement 11a dient zur Beabstandung und zur Isolation des jeweiligen bogenförmigen Grundelements 11b. Die jeweilige Haltevorrichtung 1 ist mit einem Kontaktelement ausgeführt, so dass zwischen einer Stromschiene 13 und der jeweiligen Schleifringbürste (nicht dargestellt) 2a, 2b ein elektrischer Kontakt bestehen kann.

Die Schleifringbrücke 12 dient zur Übertragung von elektrischer Leistung auf einen Schleifring 21. Der Schleifring 21 weist in einer möglichen Ausführung drei Phasen auf, wobei die drei Phasen jeweils mit Schleifringbürsten 2a, 2b auf den Schleifring 21 übertragbar sind. Die Schleifringbürsten 2a, 2b sind in Haltevorrichtungen 1 positioniert. Die Haltevorrichtungen 1 sind an jeweils einem bogenförmigen Grundelement 11b befestigt.

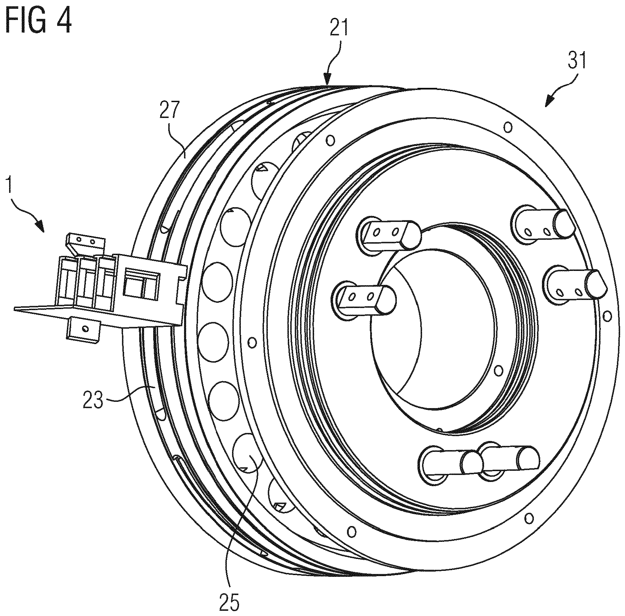

FIG 4 zeigt eine Schleifringeinheit 31. Die Schleifringeinheit umfasst einen Schleifring 21 und eine Haltevorrichtung 1. Die Haltevorrichtung 1 dient zur Aufnahme von Schleifringbürsten 2a, 2b (nicht dargestellt). Die jeweilige Schleifringbürste 2a, 2b beaufschlagt jeweils eine Kontaktfläche 27 des Schleifrings 21. Die Kontaktfläche 27 weist eine Aussparung 23 auf, wobei die Aussparung 27 ein möglicher Ursprung des Luftstroms 15 ist. Der Luftstrom 15 wird insbesondere durch die Bohrungen 25 von einer axialen Richtung in die Aussparung überführt. Der Luftstrom 15, der mit Hilfe des Schleifrings 21 bereitgestellt wird, dient zur Kühlung der Schleifringbürsten 2a, 2b, die in der Haltevorrichtung 1 positioniert sind. Der Luftstrom 15 durchläuft hierbei den Kühlkanal 5 der Haltevorrichtung 1.

Zusammenfassend betrifft die Erfindung eine Haltevorrichtung für eine Schleifringeinheit sowie eine Schleifringbrücke 12 und eine Schleifringeinheit. Darüber hinaus betrifft die Erfindung eine elektrische Maschine oder eine Windkraftanlage jeweils mit einer solchen Schleifringbrücke 12 oder einer solchen Haltevorrichtung 1. Die Haltevorrichtung umfasst zwei Einschübe 3a, 3b für jeweils eine Schleifringbürste 2a, 2b. Die Einschübe sind durch einen Kühlkanal 5 beabstandet voneinander angeordnet. Der Kühlkanal 5 dient zur Kühlung der jeweiligen Schleifringbürste 2a, 2b, die in den jeweiligen Einschub einsetzbar ist. Der Kühlkanal 5 weist vorzugsweise Öffnungen 9 auf, so dass ein direkter Wärmeaustausch zwischen einem Luftstrom 15 und der Schleifringbürste 2a, 2b bestehen kann. Der Luftstrom 15 verläuft hierbei vorteilhaft in radialer Richtung und wird von einem Schleifring 21 bereitgestellt. Mit Hilfe der Erfindung kann eine verbesserte Kühlung einer Schleifringeinheit und damit eine Übertragung von einer elektrischen Leistung im Megawattbereich gewährleistet werden.

## Patentansprüche

1. Haltevorrichtung (1) für eine Schleifringeinheit (31), umfassend zumindest zwei Einschübe (3a,3b) für jeweils eine Schleifringbürste (2a,2b), wobei die Einschübe (3a,3b) beabstandet angeordnet sind, wobei der jeweilige Kühlkanal (5) jeweils zwischen den Einschüben (33a,3b) positioniert ist und der jeweilige Kühlkanal (5) zur Kühlung einer Seitenfläche der jeweiligen Schleifringbürste (2a,2b) ausgebildet ist, **dadurch gekennzeichnet,dass** der Kühlkanal (5) als dritter Einschub zwischen den Einschüben (3a,3b) für die jeweilige Schleifringbürste (2a,2b) positioniert ist, wobei die Einschübe (3a,3b) sowie der Kühlkanal (5) eine im Wesentlichen gleiche Form und Abmessung aufweisen.

2. Haltevorrichtung (1) nach Anspruch 1, wobei der jeweilige Einschub (3a,3b) an zumindest einer Seitenfläche eine Öffnung (9) aufweist, wobei die jeweilige Öffnung (9) einen Zugang zu der jeweiligen Schleifringbürste (2a,2b) ausbildet.

3. Haltevorrichtung (2) nach Anspruch 2, wobei die jeweilige Öffnung (9) den Kühlkanal (5) mit dem jeweiligen Einschub (3a,3b) verbindet.

4. Haltevorrichtung (1) nach einem der vorangehenden Ansprüche, wobei zumindest eine Feder (7) zur Positionierung und/oder Ausrichtung der jeweiligen Schleifringbürste (2a, 2b) vorgesehen ist.

5. Haltevorrichtung (1) nach einem der vorangehenden Ansprüche, wobei die Haltevorrichtung (1) aus einem Kunststoff oder einem Verbundwerkstoff ausgebildet ist.

6. Schleifringbrücke (12), aufweisend zumindest ein bogenförmiges Grundelement (11b), wobei zumindest eine Haltevorrichtung (1) nach einem der vorangehenden Ansprüchen an dem bogenförmigen Grundelement (11b) befestigt ist, wobei die Einschübe (3a,3b) des jeweiligen Halteelements (1) derart ausgerichtet sind, dass die jeweils in dem Einschub (3a,3b) einsetzbare Schleifringbürste (2a,2b) orthogonal zu einer zylindrischen Mantelfläche, insbesondere einer Kontaktfläche (27) eines Schleifrings (21) ausgerichtet ist.

7. Schleifringbrücke (12) nach Anspruch 6, aufweisend mehrere bogenförmige Grundelemente (11b), wobei die bogenförmigen Grundelemente (11b) mit zumindest einem axialen Grundelement (11a) verbunden sind, und wobei die bogenförmigen Grundelemente (11b) so ausgerichtet sind, dass die jeweilige Haltevorrichtungen (1), welche an dem bogenförmigen Grundelement (11b) befestigt sind, parallel zueinander ausgebildet sind.

8. Schleifringbrücke (12) nach einem der Ansprüche 6 oder 7, wobei das jeweilige bogenförmige Grundelement (11b) zumindest zum Teil aus einem Metall, insbesondere Kupfer, Aluminium oder Edelstahl, besteht und das bogenförmige Grundelement (11b) zur elektrischen Verbindung der Schleifringbürsten (2a, 2b) ausgebildet ist, welche dem jeweiligen bogenförmigen Grundelement (11b) zugeordnet sind.

9. Schleifringbrücke (12) nach einem der vorangehenden Ansprüche, aufweisend zumindest vier bogenförmige Grundelemente (11b), die jeweils von axialen Grundelementen (11a) in paralleler Ausrichtung beabstandet positioniert sind.

10. Schleifringeinheit (31), aufweisend einen Schleifring (21) und eine Schleifringbrücke (12) nach einem der Ansprüche 6 bis 9, wobei der Schleifring (21) eine oder mehrere Kontaktflächen (27) umfasst, wobei die Kontaktflächen (27) jeweils beabstandet um eine Mantelfläche des Schleifrings (21) umlaufend angeordnet sind, wobei der Schleifring (21) Aussparungen (23) in der jeweiligen Kontaktfläche (27) aufweist, und die Aussparungen (23), insbesondere bei Drehung des Schleifrings (21), einen Luftstrom (15) in radialer Richtung durch den Kühlkanal (5) der jeweiligen Haltevorrichtung (1) bereitstellen, wobei der Luftstrom (15) zur Kühlung zumindest einer Seitenfläche der jeweiligen Schleifringbürste (2a,2b) ausgebildet ist.

11. Schleifringeinheit (31) nach Anspruch 10, wobei die Öffnungen (9) zum Beaufschlagen der jeweiligen Schleifringbürste (2a,2b) mit dem Luftstrom (15) ausgebildet sind.

12. Elektrische Maschine, aufweisend zumindest eine Haltevorrichtung nach einem der Ansprüche 1 bis 5 oder eine Schleifringeinheit nach einem der Ansprüche 10 oder 11.

13. Windkraftanlage, aufweisend zumindest eine Haltevorrichtung nach einem der Ansprüche 1 bis 5 oder eine Schleifringeinheit nach einem der Ansprüche 10 oder 11.

## Claims

1. Holding device (1) for a slip ring unit (31), comprising at least two slide-in units (3a, 3b) for a respective slip ring brush (2a, 2b), wherein the slide-in units (3a, 3b) are arranged at a distance from one another, wherein the respective cooling duct (5) is in each case positioned between the slide-in units (33a, 3b) and the respective cooling duct (5) is designed to cool a side surface of the respective slip ring brush (2a, 2b),
**characterized in that** the cooling duct (5) is positioned as a third slide-in unit between the slide-in units (3a, 3b) for the respective slip ring brush (2a, 2b), wherein the slide-in units (3a, 3b) and the cooling duct (5) have a substantially identical shape and dimension.

2. Holding device (1) according to Claim 1, wherein the respective slide-in unit (3a, 3b) has an opening (9) on at least one side surface, wherein the respective opening (9) forms an access to the respective slip ring brush (2a, 2b).

3. Holding device (2) according to Claim 2, wherein the respective opening (9) connects the cooling duct (5) to the respective slide-in unit (3a, 3b).

4. Holding device (1) according to one of the preceding claims, wherein at least one spring (7) is provided for positioning and/or aligning the respective slip ring brush (2a, 2b).

5. Holding device (1) according to one of the preceding claims, wherein the holding device (1) is formed from a plastic or a composite material.

6. Slip ring bridge (12), having at least one bow-shaped main element (11b) wherein at least one holding device (1) according to one of the preceding claims is fixed to the bow-shaped main element (11b), wherein the slide-in units (3a, 3b) of the respective holding element (1) are aligned in such a way that the respective slip ring brush (2a, 2b) that can be inserted into the slide-in unit (3a, 3b) is aligned orthogonally to a cylindrical lateral surface, in particular a contact surface (27) of a slip ring (21).

7. Slip ring bridge (12) according to Claim 6, having a plurality of bow-shaped main elements (11b), wherein the bow-shaped main elements (11b) are connected to at least one axial main element (11a), and wherein the bow-shaped main elements (11b) are aligned in such a way that the respective holding devices (1) which are fixed to the bow-shaped main element (11b) are parallel to one another.

8. Slip ring bridge (12) according to either of Claims 6 and 7, wherein the respective bow-shaped main element (11b) consists at least partly of a metal, in particular copper, aluminium or stainless steel, and the bow-shaped main element (11b) is designed for the electrical connection of the slip ring brushes (2a, 2b) which are assigned to the respective bow-shaped main element (11b).

9. Slip ring bridge (12) according to one of the preceding claims, having at least four bow-shaped main elements (11b), which are each positioned at a distance from one another from axial main elements (11a) in a parallel alignment.

10. Slip ring units (31), having a slip ring (21) and a slip ring bridge (12) according to one of Claims 6 to 9, wherein the slip ring (21) comprises one or more contact surfaces (27), wherein the contact surfaces (27) are each arranged at a distance running around a circumferential surface of the slip ring (21), wherein the slip ring (21) has recesses (23) in the respective contact surface (27), and the recesses (23) provide an air flow (15) in the radial direction through the cooling duct (5) of the respective holding device (1), in particular during rotation of the slip ring (21), wherein the air flow (15) is designed to cool at least one side surface of the respective slip ring brush (2a, 2b).

11. Slip ring unit (31) according to Claim 10, wherein the openings (9) are designed to apply the air flow (15) to the respective slip ring brush (2a, 2b).

12. Electric machine, having at least one holding device according to one of Claims 1 to 5 or a slip ring unit according to either of Claims 10 and 11.

13. Wind turbine, having at least one holding device according to one of Claims 1 to 5 or a slip ring unit according to either of Claims 10 and 11.

## Revendications

1. Dispositif de maintien (1) pour une unité de bague collectrice (31), comprenant au moins deux tiroirs (3a, 3b) pour respectivement un balai de bague collectrice (2a, 2b), les tiroirs (3a, 3b) étant disposés de manière espacée, le canal de refroidissement (5) respectif étant positionné respectivement entre les tiroirs (33a, 3b) et le canal de refroidissement (5) respectif étant réalisé pour le refroidissement d'une surface latérale des balais de bague collectrice (2a, 2b) respectifs,
**caractérisé en ce que** le canal de refroidissement (5) est positionné en tant que troisième tiroir entre les tiroirs (3a, 3b) pour les balais de bague collectrice (2a, 2b) respectifs, les tiroirs (3a, 3b) ainsi que le canal de refroidissement (5) présentant une forme et une dimension sensiblement identiques.

2. Dispositif de maintien (1) selon la revendication 1, le tiroir (3a, 3b) respectif présentant une ouverture (9) sur au moins une surface latérale, l'ouverture (9) respective formant un accès au balai de bague collectrice (2a, 2b) respectif.

3. Dispositif de maintien (2) selon la revendication 2, l'ouverture (9) respective connectant le canal de refroidissement (5) au tiroir (3a, 3b) respectif.

4. Dispositif de maintien (1) selon l'une des revendications précédentes, au moins un ressort (7) étant prévu pour le positionnement et/ou l'orientation des balais de bague collectrice (2a, 2b) respectifs.

5. Dispositif de maintien (1) selon l'une des revendications précédentes, le dispositif de maintien (1) étant formé à partir d'une matière synthétique ou d'une matière composite.

6. Pont de bague collectrice (12), présentant au moins un élément de base (11b) arqué, au moins un dispositif de maintien (1) selon l'une des revendications précédentes étant fixé à l'élément de base (11b) arqué, les tiroirs (3a, 3b) de l'élément de maintien (1) respectif étant orientés de telle sorte que le balai de bague collectrice (2a, 2b) pouvant être inséré respectivement dans le tiroir (3a, 3b) soit orienté orthogonalement à une surface d'enveloppe cylindrique, en particulier à une surface de contact (27) d'une bague collectrice (21).

7. Pont de bague collectrice (12) selon la revendication 6, présentant plusieurs éléments de base (11b) arqués, les éléments de base (11b) arqués étant connectés à au moins un élément de base (11a) axial, et les éléments de base (11b) arqués étant orientés de telle sorte que les dispositifs de maintien (1) respectifs, qui sont fixés à l'élément de base (11b) arqué, soient formés parallèlement les uns aux autres.

8. Pont de bague collectrice (12) selon l'une des revendications 6 ou 7, l'élément de base (11b) arqué respectif étant constitué au moins en partie d'un métal, en particulier de cuivre, d'aluminium ou d'acier fin, et l'élément de base (11b) arqué étant réalisé pour la connexion électrique des balais de bague collectrice (2a, 2b), lesquels sont associés à l'élément de base (11b) arqué respectif.

9. Pont de bague collectrice (12) selon l'une des revendications précédentes, présentant au moins quatre aux éléments de base (11b) arqués, qui sont positionnées de manière espacée respectivement d'éléments de base (11a) axiaux dans une orientation parallèle.

10. Unité de bague collectrice (31), présentant une bague collectrice (21) et un pont de bague collectrice (12) selon l'une des revendications 6 à 9, la bague collectrice (21) comprenant une ou plusieurs surfaces de contact (27), les surfaces de contact (27) étant disposées respectivement de manière à s'étendre de façon espacée autour d'une surface d'enveloppe de la bague collectrice (21), la bague collectrice (21) présentant des évidements (23) dans la surface de contact (27) respective, et les évidements (23) produisant, en particulier lors de la rotation de la bague collectrice (21), un flux d'air (15) dans la direction radiale à travers le canal de refroidissement (5) du dispositif de maintien (1) respectif, le flux d'air (15) étant réalisé pour le refroidissement d'au moins une surface latérale du balai de bague collectrice (2a, 2b) respectif.

11. Unité de bague collectrice (31) selon la revendication 10, les ouvertures (9) étant formées pour soumettre le balai de bague collectrice (2a, 2b) respectif au flux d'air (15).

12. Machine électrique, présentant au moins un dispositif de maintien selon l'une des revendications 1 à 5 ou une unité de bague collectrice selon l'une des revendications 10 ou 11.

13. Éolienne, présentant au moins un dispositif de maintien selon l'une des revendications 1 à 5 ou une unités de bague collectrice selon l'une des revendications 10 ou 11.
